# DEMANDE DE BREVET EUROPEEN

(11) **EP 4 053 949 A1**
(43) Date de publication de la demande: **07.09.2022**
(21) Numéro de dépôt: 22159973.1
(22) Date de dépôt: 03.03.2022
(51) Int. Cl.: H01M 8/0228, H01M 8/0221, H01M 8/0276, H01M 8/0286, H01M 8/0267, H01M 8/10, H01M 8/1018, H01M 8/0284

(54) **PROCÉDÉ DE FABRICATION D'UN SÉPARATEUR POUR RÉACTEUR ÉLECTROCHIMIQUE ET SÉPARATEUR POUR RÉACTEUR ÉLECTROCHIMIQUE**

(30) Priorité: 05.03.2021 FR 2102164
(71) Demandeur: Alstom Hydrogène SAS, 13547 Aix en Provence Cedex 4 (FR)
(72) Inventeur: GUENOT, Benoit, 13100 AIX EN PROVENCE (FR); RAKOTONDRAINIBE, André, 13090 AIX-EN-PROVENCE (FR); GENTILS, Bruno, 83170 TOURVES (FR)
(74) Mandataire: Lavoix

(57) **Abrégé**

Le procédé de fabrication comprenant la fourniture d'une plaque séparatrice (14) comprenant une face de distribution (16) configurée pour canaliser un fluide le long d'une face d'un assemblage membrane-électrodes appliqué contre la plaque séparatrice (14), et l'application d'un film d'étanchéité (24) sur la face de distribution (16) de la plaque séparatrice (14) pour assurer l'étanchéité entre la plaque séparatrice (14) et l'assemblage membrane-électrodes (6) et/ou un autre séparateur (4) prenant l'assemblage membrane-électrodes en sandwich avec le séparateur (4), le film d'étanchéité (24) étant collé sur sa première face (24A) tournée vers la plaque séparatrice (14) pour adhérer à celle-ci et non-collant sur sa deuxième face (24B) opposée à la plaque séparatrice (14).

## Description

La présente invention concerne le domaine des réacteurs électrochimiques comprenant un empilement de séparateurs et d'assemblages membrane-électrodes définissant des cellules électrochimiques.

Un tel réacteur électrochimique est par exemple une pile à combustible pour la production d'électricité par réaction électrochimique entre un comburant et un combustible, ou un électrolyseur pour la séparation d'éléments chimiques d'un fluide en utilisant de l'électricité, par exemple pour la production de dihydrogène et de dioxygène à partir d'eau.

Dans un tel réacteur électrochimique, chaque assemblage membrane-électrodes se présente sous la forme d'un stratifié comprenant une membrane échangeuse d'ions intercalée entre deux électrodes.

Chaque séparateur présente la forme d'une plaque, au moins une des deux faces du séparateur étant configurée pour être appliquée contre une face d'un assemblage membrane-électrodes pour canaliser un fluide de manière qu'il s'écoule le long de ladite face de l'assemblage membrane-électrodes.

Chaque cellule électrochimique est définie par un assemblage membrane-électrodes intercalé entre deux séparateurs, chaque séparateur définissant une chambre fluidique avec la face de l'assemblage membrane-électrodes contre laquelle il est appliqué, la réaction électrochimique étant réalisée par échange d'ions entre les chambres fluidiques, au travers de l'assemblage membrane-électrodes.

Chaque séparateur présente par exemple des ouvertures traversant le séparateur, prévues pour former dans l'empilement au moins un collecteur d'entrée pour alimenter des chambres fluidiques des cellules électrochimiques en fluides et au moins un collecteur de sortie pour récupérer des fluides à la sortie des chambres fluidiques.

Pour assurer le fonctionnement du réacteur électrochimique, il est nécessaire d'assurer l'étanchéité entre chaque face de l'assemblage membrane-électrodes et le séparateur appliqués contre cette face de l'assemblage membrane-électrodes et/ou entre les deux séparateurs d'une même cellule électrochimique.

Pour ce faire, il est possible de déposer un joint d'étanchéité sur une zone d'étanchéité de chaque séparateur, sous la forme d'un cordon d'étanchéité.

Toutefois, le dépôt d'un tel joint d'étanchéité, même s'il est réalisé de manière robotisée, est coûteux et entraîne un taux de rébus non négligeable, notamment si le joint n'est pas disposé correctement sur la zone d'étanchéité ou si la forme du joint n'est pas maîtrisée.

Un des buts de l'invention est de proposer un procédé de fabrication d'un séparateur de réacteur électrochimique qui soit facile et économique à fabriquer, tout en obtenant une étanchéité satisfaisante.

A cet effet, l'invention propose un procédé de fabrication d'un séparateur pour un réacteur électrochimique formé d'un empilement de séparateurs et d'assemblages membrane-électrodes définissant des cellules électrochimiques superposées, le procédé de fabrication comprenant la fourniture d'une plaque séparatrice comprenant une face de distribution configurée pour canaliser un fluide le long d'une face d'un assemblage membrane-électrodes appliqué contre la plaque séparatrice, et l'application d'un film d'étanchéité sur la face de distribution de la plaque séparatrice pour assurer l'étanchéité entre la plaque séparatrice et l'assemblage membrane-électrodes et/ou un autre séparateur prenant l'assemblage membrane-électrodes en sandwich avec le séparateur, le film d'étanchéité étant collé sur sa première face tournée vers la plaque séparatrice pour adhérer à celle-ci et non-collant sur sa deuxième face opposée à la plaque séparatrice.

L'application d'un film d'étanchéité sur la plaque séparatrice pour former le séparateur permet d'appliquer le film d'étanchéité sur des zones d'étanchéité de la plaque séparatrice destinées à venir en contact étanche avec un assemblage membrane-électrodes ou avec un autre séparateur, de manière rapide et économique. L'étanchéité est maîtrisée, notamment parce que l'épaisseur du film d'étanchéité peut être facilement maîtrisée. La face non-collante du film d'étanchéité permet le démontage du séparateur, par exemple au cours de la fabrication de l'empilement ou pour des opérations de maintenance réalisées sur l'empilement.

Selon des modes de réalisation particuliers, le procédé de fabrication comprend une ou plusieurs des caractéristiques optionnelles suivantes, prises individuellement ou selon toutes les combinaisons techniquement possibles :
- le film d'étanchéité est prédécoupé de manière à ménager des lumières dans le film d'étanchéité avant d'être appliqué sur le plaque séparatrice ;
- le film d'étanchéité est appliqué sur la plaque séparatrice à l'aide d'une presse de jointage configurée pour presser le film d'étanchéité contre ladite face de distribution de la plaque séparatrice ;
- la presse de jointage comprend deux parties de presse de jointage mobiles l'une par rapport à l'autre entre une position ouverte permettant de positionner le film d'étanchéité et la plaque séparatrice entre les deux parties de presse et une position fermée permettant de presser le film d'étanchéité contre la plaque séparatrice ;

- le film d'étanchéité est fourni sous la forme d'une feuille individuelle ou sous la forme d'une bande d'étanchéité comprenant une série de films d'étanchéité ;
- le procédé comprend l'assemblage de la plaque séparatrice avec une autre plaque séparatrice par superposition et assemblage de deux plaques séparatrices à l'aide d'un film adhésif collant sur ses deux faces, interposé entre les deux plaques séparatrices ;
- le film adhésif est prédécoupé de manière à ménager des fenêtres dans le film adhésif avant son interposition entre les deux plaques séparatrices ;
- le film adhésif est fourni sous la forme d'une feuille ou sous la forme d'une bande adhésive comprenant une série de films adhésif ;
- le film adhésif présente une épaisseur strictement inférieure à celle du film d'étanchéité appliqué sur la plaque séparatrice ;
- l'autre plaque séparatrice est munie d'un film d'étanchéité sur sa face de distribution tournée à l'opposé de la plaque séparatrice, ce film d'étanchéité étant collé sur sa première face tournée vers l'autre plaque séparatrice pour adhérer à celle-ci et non-collant sur sa deuxième face opposée à l'autre plaque séparatrice.

L'invention concerne également un procédé de réalisation d'un réacteur électrochimique formé d'un empilement de séparateurs et d'assemblages membrane-électrodes définissant des cellules électrochimiques superposées, l'empilement étant réalisé en utilisant un ou plusieurs séparateur(s) obtenu(s) selon un procédé de fabrication tel que défini ci-dessus.

L'invention concerne en outre un séparateur de réacteur électrochimique comprenant une plaque séparatrice possédant une face de distribution configurée pour canaliser un fluide le long d'une face d'un assemblage membrane-électrode appliqué contre cette face de distribution, et un film d'étanchéité déposé sur la face de distribution de la plaque séparatrice pour assurer l'étanchéité avec l'assemblage membrane-électrodes et/ou avec un autre séparateur prenant l'assemblage membrane-électrodes en sandwich avec le séparateur, le film d'étanchéité étant collé sur sa première face tournée vers la plaque séparatrice pour adhérer à celle-ci et non-collant sur sa deuxième face opposée à la plaque séparatrice.

Selon des modes de réalisation particuliers, le séparateur comprend une ou plusieurs des caractéristiques optionnelles suivantes, prises individuellement ou selon toutes les combinaisons techniquement possibles :
- le séparateur comprend une autre plaque séparatrice assemblée avec la plaque séparatrice à l'aide d'un film adhésif interposé entre les deux plaques séparatrices ;
- l'autre plaque séparatrice possède, du côté opposé à la plaque séparatrice, une face de distribution, le séparateur comprenant un film d'étanchéité déposé sur ladite face de distribution de l'autre plaque séparatrice, ce film d'étanchéité étant collé sur sa première face tournée vers l'autre plaque séparatrice pour adhérer à celle-ci et non-collant sur sa deuxième face opposée à l'autre plaque séparatrice.

L'invention concerne aussi un réacteur électrochimique formé d'un empilement de séparateurs et d'assemblages membrane-électrodes définissant des cellules électrochimiques superposées, l'empilement incluant un ou plusieurs séparateur(s) tel(s) que défini(s) ci-dessus.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue en perspective éclatée d'un empilement de séparateurs et d'assemblages membrane-électrodes d'un réacteur électrochimique formé;
- la Figure 2 est une vue en coupe d'un des séparateurs, selon II-II sur le Figure 1 ;
- les Figures 3 et 4 sont des vue schématiques illustrant des étapes d'un procédé de fabrication du séparateur de la Figure 2 ;
- les Figures 5 et 6 sont des vue schématiques illustrant des étapes d'un autre procédé de fabrication du séparateur de la Figure 2 ; et
- la Figure 7 est une vue en coupe d'un séparateur selon un autre exemple de réalisation.

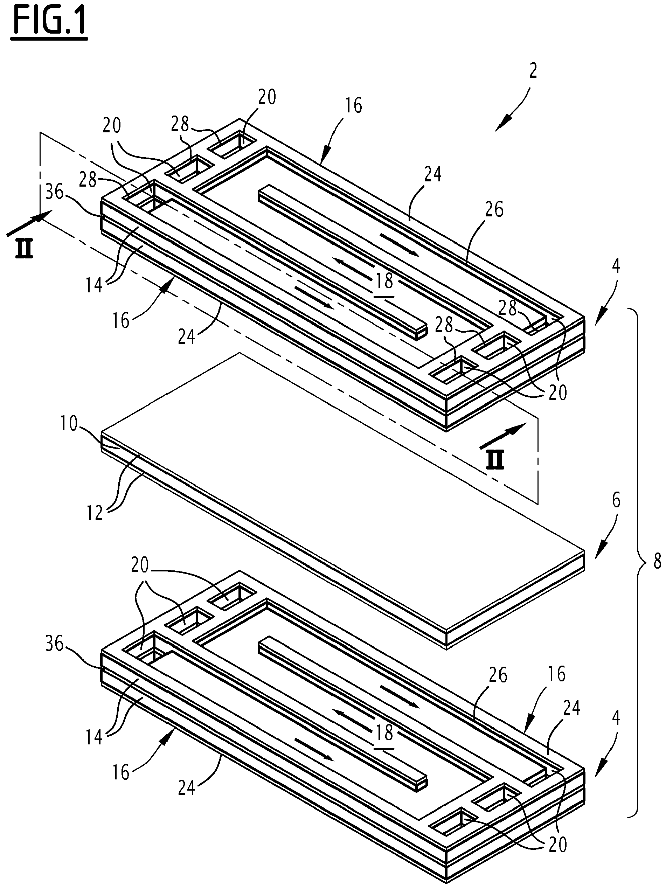

Le réacteur électrochimique 2 illustré sur la Figure 1 comprend un empilement de séparateurs 4 et d'assemblages membrane-électrodes 6, définissant des cellules électrochimiques 8 superposées. Chaque cellule électrochimique 8 est formée par un assemblage membrane-électrodes 6 interposé entre deux séparateurs 4.

Seule une cellule électrochimique 8 est illustrée sur la Figure 1 pour des raisons de de clarté des dessins. En pratique, un réacteur électrochimique 2 peut comprendre plusieurs dizaines ou centaines de cellules électrochimique 8 superposées.

Chaque assemblage membrane-électrodes 6 se présente sous la forme d'un stratifié formé d'une membrane échangeuse d'ions 10 interposée entre deux électrodes 12. La membrane échangeuse d'ions 10 est par exemple une membrane échangeuse de protons (ou PEM de l'anglais « Proton Exchange Membrane »).

Chaque séparateur 4 est configuré pour canaliser un fluide le long de ladite face de l'assemblage membrane-électrode 6 en vue de la réaction électrochimique avec échange d'ions entre les fluides canalisés par les séparateurs 4 de part et d'autre de l'assemblage membrane-électrodes 6, les ions passant à travers l'assemblage membrane-électrode 6.

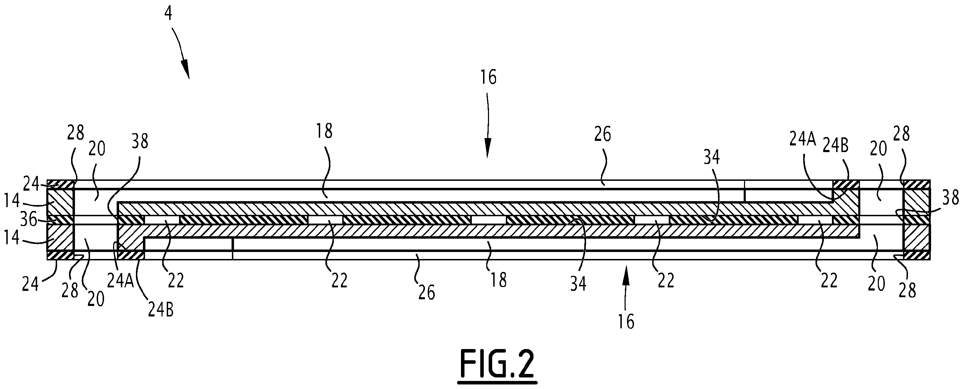

Les séparateurs 4 sont analogues et un seul séparateur 4 sera décrit plus en détail en référence à la Figure 2.

Le séparateur 4 de la Figure 1 est un séparateur bipolaire configuré pour être interposé entre deux assemblages membrane-électrode 6, en canalisant un fluide le long d'une face de chacun de ces deux assemblages membrane-électrode 6.

Lors que le réacteur électrochimique possède des séparateurs 4 bipolaires, il est formé d'un empilement alterné de séparateurs 4 et d'assemblages membrane-électrodes 6.

Le séparateur 4 de la Figure 2 est stratifié. Il est formé de deux plaques séparatrices 14 superposées et assemblées entre elles.

Chaque plaque séparatrice 14 possède une face de distribution 16 tournée à l'opposé de l'autre plaque séparatrice 14 du séparateur 4, et configurée pour canaliser un fluide le long une face d'un assemblage membrane-électrode 6 contre laquelle la plaque séparatrice 14 est appliquée (comme illustré par des flèches sur la Figure 1).

Chaque face de distribution 16 définit une chambre fluidique 18 pour l'écoulement du fluide le long de la face de l'assemblage membrane-électrodes 6 appliquée contre ladite face de distribution 16.

Chaque face de distribution 16 possède par exemple des canaux pour l'écoulement du fluide le long de l'assemblage membrane-électrodes 6. Les canaux forment un champ d'écoulement (ou « flow field ») en anglais. Les canaux définissent la chambre fluidique 18.

Chaque plaque séparatrice 14 est munie d'ouvertures 20 destinées à former des collecteurs traversant l'empilement.

Dans l'empilement, chaque collecteur est en communication fluidique avec une des deux chambres fluidiques 18 de chaque cellule électrochimique 8 pour alimenter en fluide les chambres fluidiques 18 auxquelles il est raccordé ou pour récupérer du fluide à la sortie de ces chambres fluidiques 18 auxquelles il est raccordé, ou avec des éventuels canaux de refroidissement 22 (Figure 2) des séparateurs 4.

Chaque plaque séparatrice 14 est munie, sur sa face de distribution 16, d'un film d'étanchéité 24 déposé sur la laide face de distribution 16 de la plaque séparatrice 14.

Le film d'étanchéité 24 est configuré pour assurer l'étanchéité de la chambre fluidique 18 délimitée par la face de distribution 16 avec l'assemblage membrane-électrodes 6 situé en regards, et, le cas échéant, pour assurer l'étanchéité des collecteurs.

Le film d'étanchéité 24 possède des lumières pour permettre la circulation des fluides le long de l'assemblage membrane-électrodes 6 dans la chambre fluidique 18 et le cas échéant dans les collecteurs.

Une lumière principale 26 est par exemple prévue au droit de la chambre fluidique 18 et/ou des lumières de collecteur 28 sont par exemple prévues au droit des ouvertures 20 délimitant les collecteurs.

Le film d'étanchéité 24 comprend par exemple un substrat muni sur une seule de ses deux faces d'une couche adhésive.

Le substrat du film d'étanchéité 24 est par exemple réalisé en silicone, en éthylène-propylène-diène monomère (ou EPDM), en poly(téréphtalate d'éthylène) (PET) ou en polychlorure de vinyle (PVC). De préférence, il s'agit d'éthylène-propylène-diène monomère (ou EPDM).

Le film d'étanchéité 24 présente par exemple une épaisseur comprise entre 0,50 mm et 0,75 mm, en particulier une épaisseur sensiblement égale à 0,60 mm.

La couche adhésive est par exemple une couche de colle acrylique.

Le film d'étanchéité 24 possède une première face 24A en contact avec la plaque séparatrice 14 et une deuxième face 24B opposée à la première face 24A, et destinée à venir en contact avec un assemblage membrane-électrodes 6 et/ou avec un autre séparateur 4.

Le film d'étanchéité 24 est adhésif (ou collant) sur sa première face 24A tournée vers la plaque séparatrice 14 sur laquelle il est appliqué, et non-adhésif (ou non-collant) sur sa deuxième face 24B tournée à l'opposé de la plaque séparatrice 14 sur laquelle il est appliqué.

Le film d'étanchéité 24 adhère à la plaque séparatrice 14. Le séparateur 4 muni du film d'étanchéité 24 peut être manipulé pour réaliser l'empilement sans que le film d'étanchéité 24 ne se sépare du séparateur 4.

Lorsque l'empilement est réalisé, le film d'étanchéité 24 n'adhère pas à l'assemblage membrane-électrodes 6 appliquée contre la plaque séparatrice 14 ou à un autre séparateur 4 prenant l'assemblage membrane-électrodes 6 en sandwich.

Il est ainsi possible de démonter facilement l'empilement, par exemple pour retirer un séparateur 4 défectueux ou un assemblage membrane-électrodes 6 défectueux. Il est possible de remplacer uniquement le composant défectueux, sans détériorer les autres composant de l'empilement.

En fonctionnement, l'empilement est de préférence maintenu comprimé, de sorte que le film d'étanchéité 24 porté par un séparateur 4 est appliqué sous pression contre un assemblage membrane-électrodes 6 ou/un contre autre séparateur 4 prenant l'assemblage membrane-électrodes 6 en sandwich avec le séparateur 4, avec une pression suffisante pour assurer l'étanchéité.

Chaque plaque séparatrice 14 du séparateur 4 possède une face d'assemblage 34 tournée vers l'autre plaque séparatrice 14 du séparateur 4.

Le séparateur 4 comprend un film adhésif 36 interposé entre les deux plaques séparatrices 14 pour assembler les plaques séparatrices 14 entre elles. Le film adhésif 36 est adhésif sur ses deux faces opposées.

En option, les plaques séparatrices 14 définissent entre elles lesdits canaux de refroidissement 22, prévus pour la circulation d'un fluide de refroidissement, qui est par exemple fourni et récupéré via deux des collecteurs.

Dans ce cas, de préférence, le film adhésif 36 est configuré pour assurer l'étanchéité entre les plaques séparatrices 14, en particulier l'étanchéité des collecteurs et des canaux de refroidissement 22.

Le film adhésif 36 est découpé de manière à former des fenêtres permettant la circulation des fluides réactifs dans les collecteurs, et, le cas échant, dans les canaux de refroidissement 22. Le film adhésif 36 comprend par exemple des fenêtres de collecteur 38, une fenêtre de collecteur 38 étant prévue au droit de chaque collecteur.

Le film adhésif 36 comprend par exemple un substrat muni sur chacune de ces deux faces d'une couche adhésive.

Le substrat du film adhésif 36 est par exemple réalisé en silicone, en éthylène-propylène-diène monomère (ou EPDM), en poly(téréphtalate d'éthylène) (PET) ou en polychlorure de vinyle (PVC). De préférence, il s'agit d'éthylène-propylène-diène monomère (ou EPDM).

Le film adhésif 36 présente par exemple une épaisseur comprise entre 0,20 mm et 0,35 mm, en particulier une épaisseur sensiblement égale à 0,25 mm.

Dans un exemple de réalisation, le film d'étanchéité 24 et le film adhésif 36 sont réalisés dans le même matériau. En variante, ils sont réalisés dans des matériaux différents.

Dans un exemple de réalisation, le film d'étanchéité 24 présente une épaisseur différente de celle du film adhésif 36.

De préférence, le film d'étanchéité 24 présente une épaisseur strictement supérieure à celle du film adhésif 36.

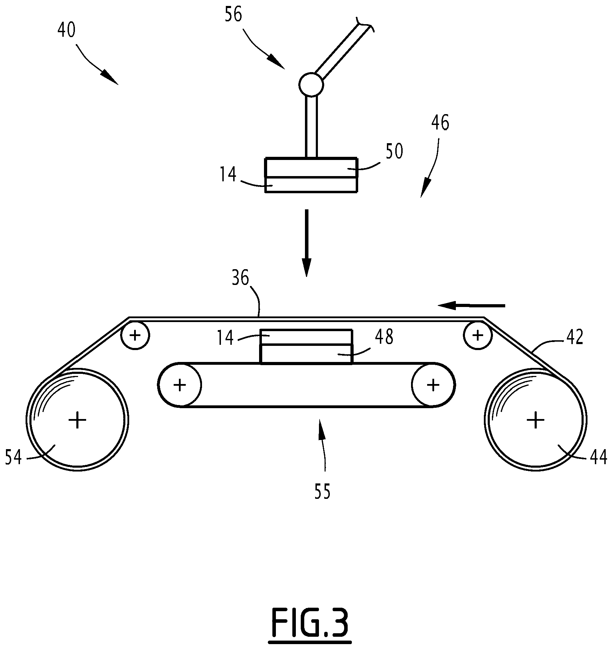

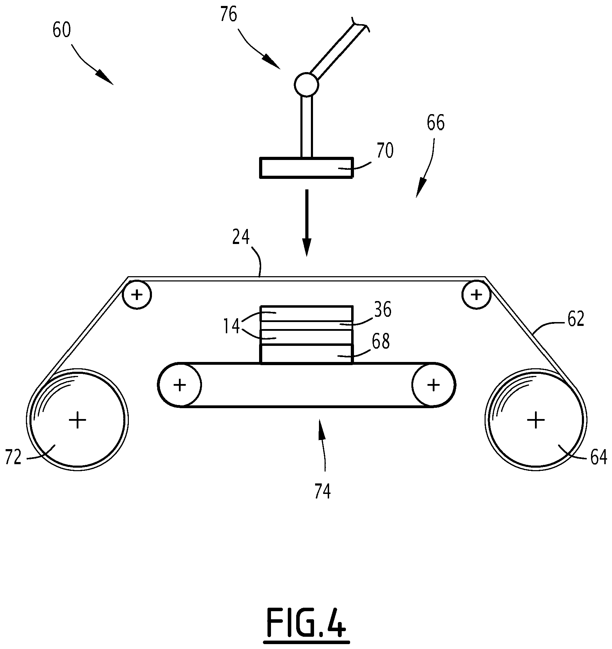

Les Figures 3 et 4 illustrent schématiquement des étapes d'un procédé de fabrication d'un séparateur 4 tel que représenté sur la Figure 2.

Comme illustré sur la Figure 3, le procédé de fabrication d'un séparateur 4 comprend une étape d'assemblage de deux plaques séparatrices 14 à l'aide d'un film adhésif 36. L'étape d'assemblage est réalisée sur un poste d'assemblage 40.

Le film adhésif 36 est conditionné sous la forme d'une bande adhésive 42, la bande adhésive 42 étant par exemple enroulée sous forme d'un rouleau adhésif 44.

De manière connue, la bande adhésive 42 est par exemple munie, sur une de ses deux faces ou chacune de ses deux faces, d'un film protecteur (non représenté) empêchant la bande adhésive 42 de se coller sur elle-même lorsqu'elle est enroulée.

La bande adhésive 42 est par exemple prédécoupée pour former des films adhésifs 36 dans la bande adhésive 42 et pour former dans chaque film adhésif 36 de la bande adhésive 42 les fenêtres nécessaires.

Le pré-découpage des films adhésifs 36 est réalisé par exemple avant d'enrouler la bande adhésive 42 pour former le rouleau adhésif 44. En variante, il peut être réalisée après déroulement du rouleau adhésif, dans un poste de découpage (non représenté) situé en amont du poste d'assemblage 40 le long du parcours de la bande adhésive 42.

Dans l'exemple de réalisation illustré, la bande adhésive 42 est déroulée du rouleau adhésif 44, une première plaque séparatrice 14 est positionnée en regard d'un film adhésif 36 prédécoupé dans la bande adhésive 42, puis une deuxième plaque séparatrice 14 est appliquée sur la première plaque séparatrice 14 de manière à prendre le film adhésif 36 en sandwich entre les deux plaques séparatrices 14, pour former un assemblage comprenant le film adhésif 36 interposé entre les deux plaques séparatrices 14.

Chaque film protecteur éventuellement disposé sur la bande adhésive 42 est retiré de celle-ci avant d'appliquer le film adhésif 36 sur les plaques séparatrices 14, de manière que le film adhésif 36 puisse adhérer aux plaques séparatrices 14 et assurer une cohésion entre elles.

Le poste d'assemblage 40 comprend par exemple une presse d'assemblage 46 comprenant des parties de presse d'assemblage 48, 50 configurées pour supporter chacune un plaque séparatrice 14 respective, et les presser l'une contre l'autre en prenant le film adhésif 36 en sandwich.

Lorsque le film adhésif 36 prédécoupé est pris en sandwich entre les plaques séparatrices 14, il est séparé du reste de la bande adhésive 42, du fait de l'application des plaques séparatrice 14 l'une contre l'autre ou par découpage.

Le poste d'assemblage 40 est configuré pour faire défiler la bande adhésive 42 à travers le poste d'assemblage 40, en particulier à travers la presse d'assemblage 46.

Optionnellement, le poste d'assemblage 40 comprend un enrouleur 54 pour récupérer la bande adhésive 42 en aval de la presse d'assemblage 46.

Les plaques séparatrices 14 sont maintenues sur les parties de presse d'assemblage 48, 50 par exemple par un dispositif à dépression.

La création d'une dépression entre la partie de presse d'assemblage 48, 50 et une plaque séparatrice 14 permet de retenir la plaque séparatrice 14 sur la partie de presse d'assemblage 48, 50, la suppression de la dépression permettant de relâcher la plaque séparatrice 14.

Les deux parties de presse d'assemblage 48, 50 sont mobiles l'une par rapport à l'autre entre une position ouverte permettant de positionner le film d'étanchéité 24 et la plaque séparatrice 14 entre les deux parties de presse d'assemblage 48, 50 et une position fermée permettant de presser le film d'étanchéité 36 contre la plaque séparatrice 14.

Dans un exemple de réalisation, le poste d'assemblage 40 comprend un convoyeur 55, par exemple un convoyeur à bande, une des parties de presse d'assemblage 48 étant supportée par le convoyeur 55 de manière à pouvoir déplacer cette partie de presse d'assemblage 48 le long du poste d'assemblage 40.

Dans un exemple de réalisation, une des parties de presse 50 est portée par un robot d'assemblage 56, par exemple par un robot d'assemblage 56 possédant un bras articulé, en particulier un bras à six articulations. Le robot d'assemblage 56 est par exemple configuré pour saisir une plaque séparatrice 14, la presser sur une autre plaque séparatrice 14 en prenant le film adhésif 36 en sandwich entre les deux plaques séparatrices 14, puis, optionnellement, saisir l'ensemble ainsi formé pour le stocker.

Comme illustré sur la Figure 4, le procédé de fabrication d'un séparateur 4 comprend une étape de jointage comprenant l'application d'un film d'étanchéité 24 sur la ou chaque face de distribution 16 de chaque plaque séparatrice 14 du séparateur 4.

L'application d'un film d'étanchéité 24 sur une face de distribution 16 d'une plaque séparatrice 14 est réalisée dans un poste de jointage 60.

Le film d'étanchéité 24 est conditionné par exemple sous la forme d'une bande d'étanchéité 62, la bande d'étanchéité 62 étant par exemple enroulée sous forme d'un rouleau 64.

Comme indiqué précédemment, le film d'étanchéité 24 possède une première face 24A adhésive (ou collante) et une deuxième face 24B non-adhésive (ou non collante).

De manière connue, la bande d'étanchéité 62 est par exemple munie, du côté de la face adhésive, d'un film protecteur (non représenté) pour permettre l'enroulement de la bande d'étanchéité 62 sans qu'elle colle sur elle-même.

La bande d'étanchéité 62 est par exemple prédécoupée pour former des films d'étanchéité 24 dans la bande d'étanchéité 62, chaque film d'étanchéité 24 possédant les lumières requises (par exemple la lumière principale 26 et les lumières de collecteur 28).

Le pré-découpage des films d'étanchéité 24 est réalisé par exemple avant d'enrouler la bande d'étanchéité 62 pour former le rouleau 64.

En variante, il est réalisé après avoir déroulé la bande d"étanchéité 62, dans un poste de découpage situé en amont du poste de jointage 60 le long du parcours de la bande d'étanchéité 62.

Dans l'exemple de réalisation illustré, la bande d'étanchéité 62 prédécoupée est déroulée du rouleau 64, la plaque séparatrice 14 dont une face de distribution 16 doit recevoir un film d'étanchéité 24 est positionnée en regard d'un film d'étanchéité 24 prédécoupé dans la bande d'étanchéité 62 et le film d'étanchéité 24 est appliqué sur la face de distribution 16 de la plaque séparatrice 14.

Le poste de jointage 60 comprend par exemple une presse de jointage 66 comprenant des parties de presse de jointage 68, 70 configurées pour supporter respectivement la plaque séparatrice 14 et le film d'étanchéité 24 et les presser l'un contre l'autre pour que le film d'étanchéité 24 adhère à la plaque séparatrice 14.

Les deux parties de presse de jointage 68, 70 sont mobiles l'une par rapport à l'autre entre une position ouverte permettant de positionner le film d'étanchéité 24 et la plaque séparatrice 14 entre les deux parties de presse de jointage 68, 70 et une position fermée permettant de presser le film d'étanchéité 24 contre la plaque séparatrice 14.

Le poste de jointage 60 est configuré pour faire défiler la bande d'étanchéité 62 à travers le poste de jointage 60, en particulier à travers la presse de jointage 66.

Optionnellement, le poste de jointage comprend un enrouleur 72 pour récupérer la bande d'étanchéité 62 en aval de la presse de jointage 66.

La plaque séparatrice 14 est maintenue sur la partie de presse de jointage 68 correspondante par exemple par un dispositif à dépression.

Dans un exemple de réalisation, le poste de jointage 60 comprend un convoyeur 74, par exemple un convoyeur à bande, la partie de presse de jointage 68 destinée à recevoir la plaque séparatrice 14 (seule ou assemblée préalablement à une autre plaque séparatrice 14) étant supportée par le convoyeur 74 de manière à pouvoir déplacer cette partie de presse de jointage 68 portant la plaque séparatrice 14 le long du poste de jointage 60.

Dans un exemple de réalisation, la partie de presse de jointage 70 destinée à appliquer le film d'étanchéité 24 contre la plaque séparatrice 14 est portée par un robot de jointage 76, par exemple un robot de jointage 76 comprenant un bras articulé, en particulier un bras articulé à six articulations. Le robot de jointage 76 est par exemple configuré pour appliquer les parties de presse de jointage 68, 70 l'une contre l'autre.

Lorsque le séparateur 4 comprend deux plaques séparatrices 14 assemblées, de préférence, le procédé de fabrication comprend l'application d'un film d'étanchéité 24 sur la face de distribution 16 de chacune des deux plaques séparatrices 14.

Dans un exemple de réalisation, comme illustré sur la Figure 4, les plaques séparatrices 14 sont assemblées avant d'appliquer un film d'étanchéité 24 sur la face de distribution 16 de chacune des plaques séparatrices 14.

En variante, chaque plaque séparatrice 14 est munie d'un film d'étanchéité 24 avant d'assembler les deux plaques séparatrices 14 avec interposition d'un film adhésif 36 pour former le séparateur 4.

Un procédé de fabrication d'un réacteur électrochimique 2 comprend la fourniture de plaques séparatrices 14, la fourniture d'assemblages membrane-électrodes 6, la fabrication d'une pluralité de séparateurs 4, en mettant en œuvre l'étape de jointage, et, éventuellement, l'étape d'assemblage décrite ci-dessus si les séparateurs 4 sont formés par assemblage de deux plaques séparatrices 14, puis la réalisation d'un empilement de séparateurs 4 et d'assemblage membrane-électrodes 6.

L'invention n'est pas limitée aux exemples de réalisation décrit précédemment, d'autres exemples de réalisation étant envisageables.

Au lieu d'être fourni sous la forme d'une bande adhésive 42, les films adhésifs 36 peuvent être fournis sous la forme de feuilles individuelles.

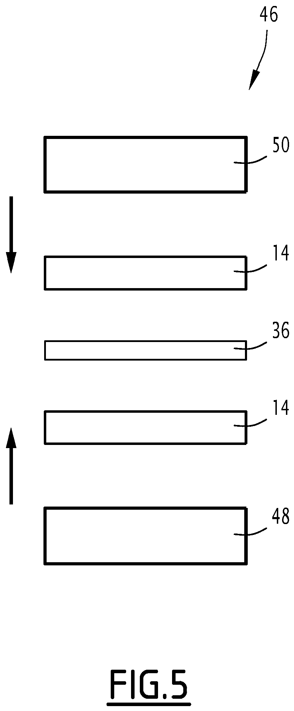

La Figure 5 illustre l'étape d'assemblage de deux plaques séparatrices 14 à l'aide d'un film adhésif 36 fourni sous la forme d'une feuille individuelle, à l'aide un poste d'assemblage 40 comprenant une presse d'assemblage 48.

Le plaques séparatrices 14 sont superposées en prenant le film adhésif 36 en sandwich et pressées à l'aide de presse d'assemblage 48.

L'application du film adhésif 36 peut être réalisée manuellement. La commande de la fermeture de la presse d'assemblage 46 peut être réalisée manuellement.

Par ailleurs, au lieu d'être fourni sous la forme d'une bande d'étanchéité 62, les films d'étanchéité 24 peuvent être fournis sous la forme de feuilles individuelles.

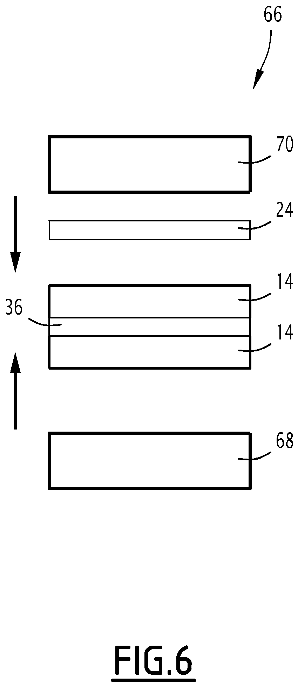

La Figure 6 illustre l'étape de jointage d'une plaque séparatrice 14, qui a été ici préalablement assemblée à une autre plaque séparatrice 14, avec un film d'étanchéité 24 fourni sous la forme d'une feuille individuelle, à l'aide d'un poste de jointage 60 comprenant une presse de jointage 66.

Le film d'étanchéité 24 est pressé contre la plaque séparatrice à l'aide de la presse de jointage 68.

L'application du film d'étanchéité 24 peut être réalisée manuellement. La commande de la fermeture de la presse de jointage 66 peut être réalisée manuellement.

Dans ce cas aussi, lorsqu'un séparateur 4 est formé de deux plaques séparatrices 14 superposées, les plaques séparatrices 14 sont assemblées avant d'appliquer un film d'étanchéité 24 sur la face de distribution 16 de chacune des plaques séparatrices 14 ou chaque plaque séparatrice 14 est munie d'un film d'étanchéité 24 avant d'assembler les deux plaques séparatrices 14 avec interposition d'un film adhésif 36 pour former le séparateur 4.

Dans un exemple de réalisation, comme illustré sur les Figures 3 et 5, les deux plaques séparatrices 14 du séparateur 14 sont appliquées simultanément de part et d'autre du film adhésif 36.

Le film adhésif 36, conditionné en bande adhésive 42 ou en feuille séparées, est pressé entre deux plaques séparatrices 14 comme illustré sur la Figure 3 ou la Figure 5.

Dans un autre exemple de réalisation, les plaques séparatrices 14 sont appliquées séquentiellement de part et d'autre du film adhésif 36.

Le film adhésif 36, conditionné en bande adhésive 42 ou en feuille séparées, est d'abord appliqué sur la face d'assemblage 34 d'une plaque séparatrice 14 par exemple dans un poste d'application, puis une autre plaque séparatrice 14 est appliquée sur film adhésif 36 pour former l'ensemble comprenant le film adhésif 36 pris en sandwich entre les deux plaques séparatrice 14.

Lorsque le film adhésif 36 est conditionné sous la forme d'une bande adhésive 42, le poste d'application (pour appliquer le film adhésif 36 sur une des deux plaques séparatrices 14) et le poste d'assemblage 40 (pour presser les plaques séparatrices 14 prenant le film adhésif 36 en sandwich) sont par exemple disposés l'un derrière l'autre le long du parcours de la bande adhésive 42.

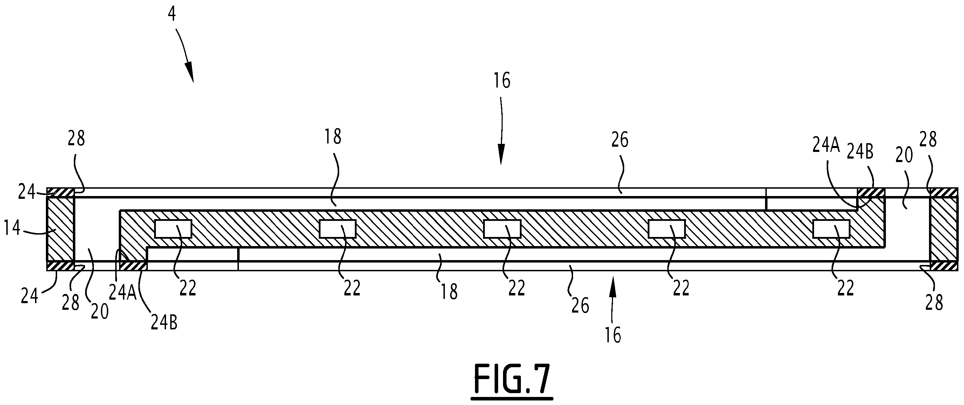

Par ailleurs, dans un exemple de réalisation illustré sur la Figure 7, un séparateur 4 comprend une seule plaque séparatrice 14 réalisée en une seule pièce de matière et configurée avec deux faces de distribution 16, auquel cas, de préférence, le procédé de fabrication comprend l'application d'un film d'étanchéité 24 sur chacune des deux faces de distribution 16 de la plaque séparatrice 14.

Dans un tel cas, le procédé de fabrication ne comprend pas d'étape d'assemblage de deux plaques séparatrice 14 pour former un séparateur 4, et le séparateur ne comprend pas de film adhésif 36 pour assembler deux plaques séparatrices 14.

Par ailleurs, les séparateurs 4 illustrés sur les Figures 2 et 7 sont des séparateurs 4 bipolaires, chacun de ces séparateurs 4 étant destinés à être interposés entre deux assemblage membrane-électrodes 6 dans un empilement alterné de séparateurs 4 et d'assemblages membrane-électrodes 6, en canalisant un fluide le long de chacun des deux assemblages membrane-électrodes 6 situé de part et d'autre du séparateur 4.

Dans un autre exemple de réalisation, un séparateur 4 est monopolaire, et prévu pour assurer une étanchéité avec un seul assemblage membrane-électrodes 6. Il possède une seul face de distribution 16.

## Revendications

1. Procédé de fabrication d'un séparateur (4) pour un réacteur électrochimique formé d'un empilement de séparateurs (4) et d'assemblages membrane-électrodes (6) définissant des cellules électrochimiques (8) superposées, le procédé de fabrication comprenant la fourniture d'une plaque séparatrice (14) comprenant une face de distribution (16) configurée pour canaliser un fluide le long d'une face d'un assemblage membrane-électrodes appliqué contre la plaque séparatrice (14), et l'application d'un film d'étanchéité sur la face de distribution (16) de la plaque séparatrice (14) pour assurer l'étanchéité entre la plaque séparatrice (14) et l'assemblage membrane-électrodes (6) et/ou un autre séparateur (4) prenant l'assemblage membrane-électrodes en sandwich avec le séparateur (4), le film d'étanchéité (24) étant collé sur sa première face (24A) tournée vers la plaque séparatrice (14) pour adhérer à celle-ci et non-collant sur sa deuxième face (24B) opposée à la plaque séparatrice (14).

2. Procédé de fabrication selon la revendication 1, dans lequel le film d'étanchéité (24) est prédécoupé de manière à ménager des lumières (26, 28) dans le film d'étanchéité avant d'être appliqué sur le plaque séparatrice (14).

3. Procédé de fabrication selon la revendication 1 ou la revendication 2, dans lequel le film d'étanchéité (24) est appliqué sur la plaque séparatrice (14) à l'aide d'une presse de jointage (66) configurée pour presser le film d'étanchéité (24) contre ladite face de distribution (16) de la plaque séparatrice (14).

4. Procédé de fabrication selon la revendication 3, dans lequel la presse de jointage (66) comprend deux parties de presse de jointage (68, 70) mobiles l'une par rapport à l'autre entre une position ouverte permettant de positionner le film d'étanchéité (24) et la plaque séparatrice (14) entre les deux parties de presse (68, 70) et une position fermée permettant de presser le film d'étanchéité (24) contre la plaque séparatrice (14).

5. Procédé de fabrication selon l'une quelconque des revendications précédentes, dans lequel le film d'étanchéité (24) est fourni sous la forme d'une feuille individuelle ou sous la forme d'une bande d'étanchéité (62) comprenant une série de films d'étanchéité (24).

6. Procédé de fabrication selon l'une quelconque des revendications précédentes, comprenant l'assemblage de la plaque séparatrice (16) avec une autre plaque séparatrice (16) par superposition et assemblage de deux plaques séparatrices (14) à l'aide d'un film adhésif (36) collant sur ses deux faces, interposé entre les deux plaques séparatrices (14).

7. Procédé de fabrication selon la revendication 6, dans lequel le film adhésif est prédécoupé de manière à ménager des fenêtres (38) dans le film adhésif (36) avant son interposition entre les deux plaques séparatrices (14).

8. Procédé de fabrication selon la revendication 6 ou la revendication 7, dans lequel le film adhésif (36) est fourni sous la forme d'une feuille ou sous la forme d'une bande adhésive (42) comprenant une série de films adhésif (36).

9. Procédé de fabrication selon l'une quelconque des revendications 6 à 8, dans lequel le film adhésif (36) présente une épaisseur strictement inférieure à celle du film d'étanchéité (24) appliqué sur la plaque séparatrice (14).

10. Procédé de fabrication selon l'une quelconque des revendications 6 à 9, dans lequel l'autre plaque séparatrice (14) est munie d'un film d'étanchéité (24) sur sa face de distribution (16) tournée à l'opposé de la plaque séparatrice (14), ce film d'étanchéité (24) étant collé sur sa première face (24A) tournée vers l'autre plaque séparatrice (14) pour adhérer à celle-ci et non-collant sur sa deuxième face opposée (24B) à l'autre plaque séparatrice (14).

11. Procédé de réalisation d'un réacteur électrochimique formé d'un empilement de séparateurs (4) et d'assemblages membrane-électrodes (6) définissant des cellules électrochimiques (8) superposées, l'empilement étant réalisé en utilisant un ou plusieurs séparateur(s) (4) obtenu(s) selon un procédé de fabrication selon l'une quelconque des revendications précédentes.

12. Séparateur de réacteur électrochimique comprenant une plaque séparatrice (14) possédant une face de distribution (16) configurée pour canaliser un fluide le long d'une face d'un assemblage membrane-électrodes (6) appliqué contre cette face de distribution (16), et un film d'étanchéité (24) déposé sur la face de distribution (16) de la plaque séparatrice pour assurer l'étanchéité avec l'assemblage membrane-électrodes (6) et/ou avec un autre séparateur (4) prenant l'assemblage membrane-électrodes (6) en sandwich avec le séparateur (4), le film d'étanchéité (24) étant collé sur sa première face (24A) tournée vers la plaque séparatrice (14) pour adhérer à celle-ci et non-collant sur sa deuxième face (24B) opposée à la plaque séparatrice (14).

13. Séparateur selon la revendication 12, comprenant une autre plaque séparatrice (14) assemblée avec la plaque séparatrice (14) à l'aide d'un film adhésif (36) interposé entre les deux plaques séparatrices (14).

14. Séparateur selon la revendication 13, dans lequel l'autre plaque séparatrice (14) possède, du côté opposé à la plaque séparatrice (14), une face de distribution (16), le séparateur comprenant un film d'étanchéité (24) déposé sur ladite face de distribution (16) de l'autre plaque séparatrice (14), ce film d'étanchéité (24) étant collé sur sa première face (24A) tournée vers l'autre plaque séparatrice (14) pour adhérer à celle-ci et non-collant sur sa deuxième face (24A) opposée à l'autre plaque séparatrice( 14).

15. Réacteur électrochimique formé d'un empilement de séparateurs (4) et d'assemblages membrane-électrodes (6) définissant des cellules électrochimiques (8) superposées, l'empilement incluant un ou plusieurs séparateur(s) (4) selon l'une quelconque des revendications 12 à 14.
